# EUROPEAN PATENT APPLICATION

(11) **EP 4 383 476 A1**
(43) Date of publication of application: **12.06.2024**
(21) Application number: 23214706.6
(22) Date of filing: 06.12.2023
(51) Int. Cl.: H01R 13/52, H01R 13/629

(54) **GROMMET HOUSING FOR RECEIVING A CONNECTOR INSERT, CONNECTOR AND CONNECTOR ASSEMBLY**

(30) Priority: 07.12.2022 DE 102022132435
(71) Applicant: TE Connectivity Solutions GmbH, 8200 Schaffhausen (CH)
(72) Inventor: MECHTERIDIS, Dimitrios, 64625 Bensheim (DE); PANITZ, Gregor, 64625 Bensheim (DE)
(74) Representative: Grünecker Patent- und Rechtsanwälte PartG mbB

(57) **Abstract**

The invention relates to a grommet housing (1) for receiving a connector insert (6), comprising: a conductor receiving opening (10) for passing an electrical or optical conductor from an outer region of the grommet housing (1) into an inner region (4) of the grommet housing (1), an insertion opening (8) for plugging the connector insert (6) together with a mating connector, a sealing surface (12) which encircles the insertion opening (8) at least in sections for sealing the inner region (4), wherein the grommet housing (1) is made of rubber-elastic material. The invention furthermore relates to a connector comprising such a grommet housing and a connector assembly.

## Description

The present invention relates to a grommet housing for receiving a connector insert. Furthermore, the invention furthermore relates to a connector with such a grommet housing and a connector assembly.

Nowadays, connectors are used in a plurality of everyday objects. In particular, connectors are used to connect electrical lines from one component to another component. For example, a connector can connect electrical or optical lines from a vehicle chassis to a door of the vehicle by connecting the connector to the mating connector in the insertion direction. The insertion direction of a connector is generally understood to mean the direction in which the connector is plugged together with a mating connector. Since the door or the intermediate space between the door and the chassis is exposed to different weather conditions, the connectors used in such an application environment have seals. The seals protect the contacts from the ingress of moisture that could cause a short circuit and from soiling. According to prior art, these seals are implemented as separate components of the connector. Furthermore, fitting a connector with electrical or optical cables is not only time-consuming, since different conductors have to be positioned correctly in the connector or a conductor receptacle of the connector in a very small space, but is also prone to errors if this assembly is done manually.

The present invention is therefore based on the object of creating a connector that is easier to assemble and easier to handle.

This object is satisfied by a grommet housing for receiving a connector insert, where the grommet housing comprises a conductor receiving opening for passing an electrical or optical conductor from an outer region of the grommet housing into an inner region of the grommet housing, an insertion opening for plugging the connector insert together with a mating connector, and a sealing surface which encircles the insertion opening at least in sections for sealing the inner region, where the grommet housing is made of a rubber-elastic material.

The present invention is advantageous because it enables a connector to be easily or automatically fitted with the grommet housing according to the invention. At the same time, the sealing surface of the grommet housing can form a reliable seal for the inner region when it abuts against a mating surface of a mating connector.

Advantageously, the insertion opening is completely encircled by the sealing surface. Furthermore, the grommet housing according to the invention is advantageously made of only one material. Alternatively, the grommet housing can also be made of several combinations of materials.

Advantageously, the grommet housing can be made of one of the following materials: rubber, a rubber-elastic material containing silicone, synthetic rubber copolymer made of acrylonitrile (ACN) and butadiene, or nitrile-butadiene rubber (NBR), ethylene propylene diene rubber (EPDM), neoprene, vinyl methyl silicone (VMS) or fluororubber (FKM) etc.

Furthermore, the present invention is advantageous because it integrates the function of the housing and a seal. This means that fewer components are necessary, resulting in material and space savings.

The invention can be further improved by the following configurations which are advantageous by themselves and which can be combined with one another at random.

According to a further advantageous configuration, the sealing surface can comprise a sealing lip. Alternatively or cumulatively, the sealing surface can comprise a plurality of sealing lips that run parallel to one another. For example, the sealing surface can comprise at least two sealing lips. Alternatively or cumulatively, the sealing surface can completely encircle the insertion opening. In other words, the sealing lip or the plurality of sealing lips, respectively, completely encircles the insertion opening.

A sealing lip of the sealing lips can run at an angle in cross section towards the mating connector. For example, the sealing lip disposed closest to the outer region can run to be oblique or inclined (towards the mating surface). Alternatively, all sealing lips of the plurality of sealing lips can have such an inclination. For example, according to a configuration with at least two sealing lips, one sealing lip of the at least two sealing lips that is arranged furthest from the inner region can extend inclined from the inside to the outside. The inclined sealing lip can extend in a direction opposite to the plugging direction of the connector. In other words, the outermost sealing lip of the at least two sealing lips can be inclined in a direction opposite to the plugging direction. Alternatively, all sealing lips can extend inclined from the inside to the outside.

According to a further advantageous configuration, at least one sealing lip of the plurality of sealing lips can be narrower or wider in cross section than the other sealing lips of the plurality of sealing lips. According to an exemplary configuration with at least two sealing lips, for example, one sealing lip of the at least two sealing lips can be narrower or wider in cross section than the other sealing lip or the other sealing lips of the at least two sealing lips.

Advantageously, droplet accumulation at a transition point between the grommet housing and the mating surface of the mating connector is reduced, since the surface tension of the moisture particles (for example water particles) falls below a physical threshold. This means that water droplets can drain from the grommet housing without penetrating the inner region.

According to a further advantageous configuration, the grommet housing can comprise a tunnel arch on an outer wall that is disposed opposite the insertion opening.

Advantageously, the connector insert in this configuration received in the inner region of the grommet housing is particularly protected from mechanical stresses introduced from the outside. At the same time, the curvature of the tunnel arch allows the grommet housing to expand significantly further in a non-destructive manner than a housing without this curvature.

Alternatively or cumulatively, the conductor receiving opening continues in a tube-like continuation of the grommet housing. In particular, this continuation can be configured like a bellows.

Alternatively or cumulatively, the tunnel arch aligns flush with the continuation of the grommet housing.

This configuration advantageously allows for a concertina-like motion of the continuation so that the conductor receiving opening is configured to be flexible and can dampen movements thereon. This increases the reliability against failure of a connector with the grommet housing according to the invention.

According to a further advantageous configuration, the grommet housing can comprise a housing opening for receiving a locking element or a control element of the connector insert, where a further sealing surface encircles the housing opening for sealing the inner region of the grommet housing.

The housing opening can advantageously be used to establish a secure coupling or locking of a connector with the mating connector via the control element or the locking element.

Alternatively or cumulatively, the sealing surface of the housing opening can comprise one or more sealing lips. They can be configured like the sealing lips of the insertion opening. The housing opening can also be completely encircled by the sealing surface. In other words, one or more sealing lips run completely around the housing opening, so that the ingress of moisture into the inner region is prevented. Preferably, the sealing lips can point towards each other from oppositely disposed sides of the housing opening.

The control element or locking element can be a slide or a lever. Furthermore, a drive aid can be provided in the inner region of the grommet housing and be operated by the control element. For example, a lever can drive a gearwheel which, in interaction with a gearwheel rail installed in the grommet housing, transfers the locking element to a locking state.

Alternatively or cumulatively, the further sealing surface of the housing opening can comprise sealing lips which project in the direction of the inner region and/or which project outwardly.

According to a further advantageous configuration, the conductor receiving opening is disposed on a first outer wall opposite the housing opening and the housing opening is disposed on a second outer wall, where the second outer wall of the grommet housing comprises an outer surface which is rectangular in cross section.

Alternatively or cumulatively, the grommet housing can comprise a further housing opening on the second outer wall, where the housing opening and the further housing opening is configured as slots arranged parallel to one another. For example, both housing openings can be configured as slots of equal size.

Alternatively or cumulatively, the grommet housing can comprise another further housing opening, where the other further housing opening is disposed between the housing opening and the further housing opening and where the other further housing opening comprises sealing surfaces which encircle the other further housing opening.

In particular, the sealing surfaces can completely encircle the other further housing opening so that a reliable seal of the inner region is ensured, even if locking elements and/or control elements protrude through the other further housing opening and experience motion forces.

Furthermore, the other further housing opening can comprise, for example, a substantially rectangular cross-sectional area.

Alternatively or cumulatively, the grommet housing can comprise another further housing opening arranged within a third outer wall of the grommet housing, where the third outer wall is disposed between the first outer wall and the second outer wall.

Cumulatively, the first, second, and/or third outer wall can define the other outer wall in which the insertion opening is disposed. In particular, the third outer wall can abut perpendicular to the second outer wall.

According to a further advantageous configuration, the other further housing opening can have a circular base area in cross section.

Alternatively or cumulatively, the third outer wall can comprise recesses or projections which concentrically enclose the other further housing opening and which project in the direction towards the inner region and/or outwardly from the grommet housing.

According to a further advantageous configuration, the grommet housing can be configured to be elastically expandable in a non-destructive manner up to three times the housing volume.

According to a further advantageous configuration, the insertion opening and/or the conductor receiving opening and/or the housing opening are disposed on different outer walls of the grommet housing. Preferably, the conductor receiving opening and/or the housing opening is located on a different outer wall than that of the insertion opening.

Furthermore, the object underlying the invention is satisfied by a connector which comprises a grommet housing according to the invention and which comprises a connector insert arranged in the inner region of the grommet housing, where a plugging face of the connector is accessible through the insertion opening.

Cumulatively, the connector insert comprises an opening. The housing opening of the grommet housing preferably aligns with the opening of the connector insert. The opening of the connector insert is advantageously accessible from the outside.

Alternatively or cumulatively, the housing opening of the grommet housing comprises a collar which projects into the opening of the connector insert.

With this configuration of the connector, the inner region of the grommet housing is advantageously particularly protected from the ingress of moisture. At the same time, the collar provides a positioning aid when the connector insert is inserted into the grommet housing. This results in a better seal overall.

Alternatively or cumulatively, the connector comprises a locking element and/or control element which projects through the housing opening of the grommet housing.

Furthermore, the object underlying the invention is satisfied by a connector assembly having a grommet housing according to the invention, where the connector assembly comprises a mating connector comprising a mating surface and where the rubber-elastic material of the sealing surface abuts against the mating surface to form a seal.

The invention shall be explained in more detail hereafter by way of example on the basis of advantageous configurations with reference to the drawings. The advantageous further developments and configurations illustrated there are each independent of one another and can be combined with one another at random, depending on how this is necessary for the application. For reasons of simplicity, elements and functions that are present in multiple embodiments may only be explained in detail once,
where
- Fig. 1: shows an exemplary connector assembly with the grommet housing according to the invention;
- Fig. 2a: shows a profile view of an exemplary configuration of the sealing surface;
- Fig. 2b: shows a further profile view of a further exemplary configuration of the sealing surface;
- Fig. 2c: shows a further profile view of a further exemplary configuration of the sealing surface;
- Fig. 3a: shows an exemplary configuration of the grommet housing;
- Fig. 3b: shows a further exemplary configuration of the grommet housing;
- Fig. 3c: shows a further exemplary configuration of the grommet housing;
- Fig. 4a: shows a further exemplary connector assembly in a non-inserted state;
- Fig. 4b: shows a further exemplary connector assembly in a non-inserted state;
- Fig. 4c: shows a further exemplary connector assembly in a non-inserted state;
- Fig. 5a: shows the exemplary connector assembly from Figure 4a in an inserted state;
- Fig. 5b: shows the exemplary connector assembly from Figure 4b in an inserted state;
- Fig. 5c: shows the exemplary connector assembly from Figure 4c in an inserted state;
- Fig. 6a: shows a sectional view of the second outer wall of the grommet housing;
- Fig. 6b: shows a sectional view of the grommet housing or of a connector, respectively;
- Fig. 7: shows a sectional view of the configuration of the grommet housing shown in Figure 4c;
- Fig. 8a: shows a perspective view of a connector with the configuration of the grommet housing shown in Figure 4c; and
- Fig. 8b: shows a further perspective view of a connector with the configuration of the grommet housing shown in Figure 4c.

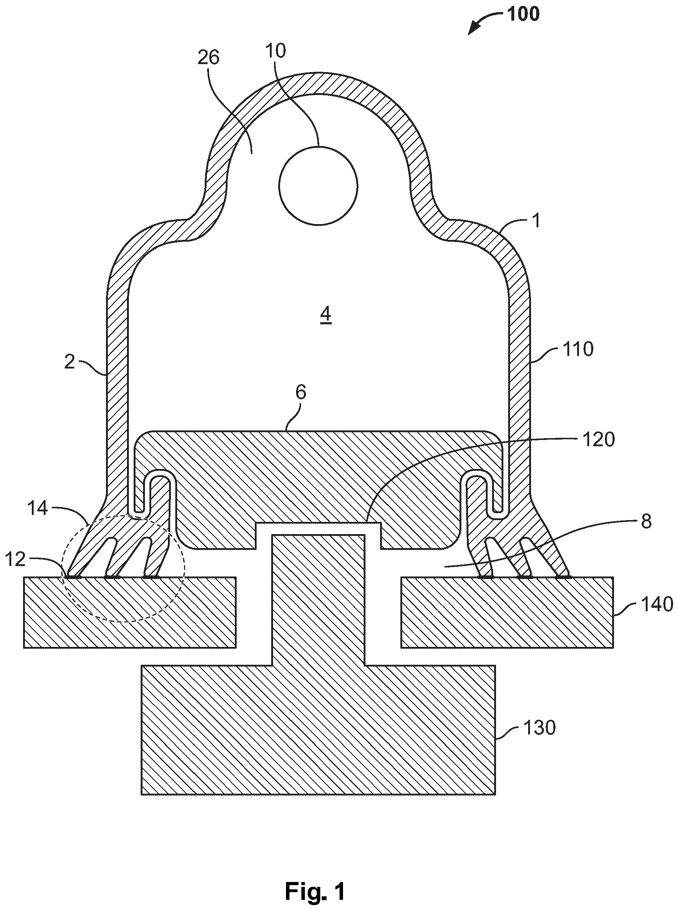

Figure 1 shows a connector assembly 100 comprising a general configuration of grommet housing 1 according to the invention. Outer walls 2 of the grommet housing enclose an inner region 4. A connector insert 6 can be received in this inner region 4. Grommet housing 1 is preferably made of rubber-elastic material. Alternatively, it can also be made of elastic-plastic material. Further examples of the material of grommet housing 1 are: rubber-elastic material containing silicone; synthetic rubber copolymer made from acrylonitrile (ACN) and butadiene; nitrile butadiene rubber (NBR); ethylene propylene diene rubber (EPDM); neoprene; or fluororubber (FKM). In particular, the grommet housing according to an advantageous configuration is made of only one of the aforementioned materials. All other features of grommet housing 1 are therefore an integral part thereof. Furthermore, according to a further configuration, the material of grommet housing 1 can be expanded in a non-destructive manner, i.e. elastically, so that the inner region in the expanded state has three times the volume in contrast to the normal state, i.e. in the non-expanded or stress-free state.

In interaction with connector insert 6, grommet housing 1 forms a connector 110 which carries electrical cables. Connector face 120 of connector 110 points towards insertion opening 8 of grommet housing 1. Connector 110 can be plugged into a mating connector 130 in a plugging direction S of connector 110. Mating connector 130 can be encircled by a mating surface 140. Furthermore, the plug connection of connector insert 6 with mating connector 130 can be secured mechanically using an optional locking element or control element (which is not shown in Figure 1). For example, this mechanical securing can be configured as a lock. The electrical conductors to be inserted into connector insert 6, for example, cables, can be run through conductor receiving opening 10 from an outer region of grommet housing 1 into inner region 4. For example, conductor receiving opening 10 can be arranged in a first outer wall 26. The former can also be disposed on an outer wall directly adjacent to insertion opening 8.

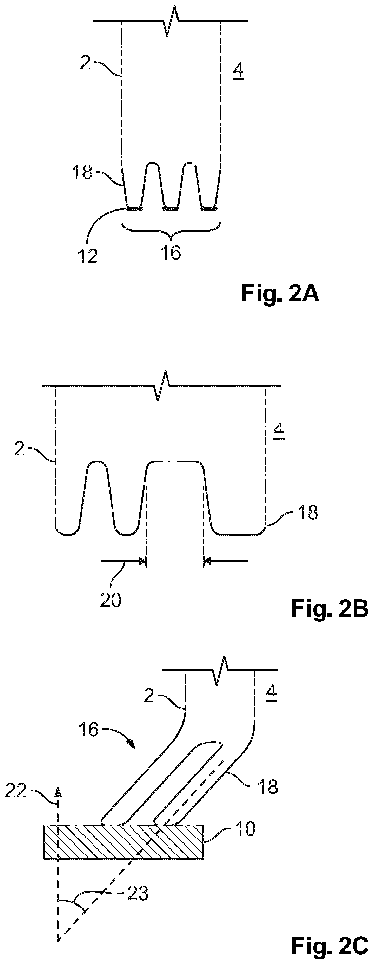

Inner region 4 of grommet housing 1 can be accessed through insertion opening 8. In order to prevent the ingress of moisture into inner region 4 possibly causing a short circuit in the electrical conductors, the insertion opening can be encircled by a sealing surface 12. Inner region is sealed when sealing surface 12 of grommet housing 1 abuts against mating surface 140. Preferably, sealing surface 12 can comprise or be formed by one or more sealing lips for sealing inner region 4. A detailed view 14 of sealing surface 12 is illustrated in following Figures 2a to 2c in which various embodiments of how sealing lips are provided for insertion opening 8 are illustrated.

The geometry of insertion opening 8 can also define a plane. For example, the plane is defined in that all external points of insertion opening 8 lie on this plane. Plugging direction S is preferably parallel to the surface normal of the plane which is encircled by insertion opening 8.

Figures 2a to 2c show profile views for various configurations of sealing surface 12 shown in detailed view 14. These configurations can be combined with one another in any way and are not only applicable to sealing surface 12 of insertion opening 8. Other openings in grommet housing 1 can also be configured with the sealing surfaces or sealing lips specified.

In Figure 2a, sealing surface 12 comprises several sealing lips 16. In the example shown, three sealing lips 18 are formed from outer wall 2 of grommet housing 1. Alternatively, sealing surface 12 can comprise only one, two, or more than three sealing lips 18.

An exemplary configuration with several sealing lips 16 is again shown in Figure 2b. However, it can also comprise more than three sealing lips 16. On the one hand, it is illustrated in Figure 2b that one of sealing lips 18 is configured to be wider than the others. For example, the innermost or outermost sealing lip 18 is wider than the other sealing lips. The innermost sealing lip refers to the sealing lip that is arranged to be closest to inner region 4 of grommet housing 1. Conversely, the outermost sealing lip refers to the sealing lip that is arranged to be furthest away from the inner region of grommet housing 1. On the other hand, it is illustrated in Figure 2b that lateral distance 20 between two adjacent sealing lips is unequal. With reference to insertion opening 8, the lateral distance denotes the distance between two sealing lips transverse to plugging direction S. It is illustrated in Figure 2a that the lateral distance between the adjacent sealing lips is respectively equal.

Figure 2c shows an exemplary configuration with two sealing lips 16 which abut at an angle against mating surface 140. Alternatively, the configuration could also be configured with only one sealing lip 18 or more than two sealing lips 16. For example, only outermost sealing lip 18 of a plurality of sealing lips 16 could be angled.

According to the configuration shown in Figure 2c, the angled sealing lip extends increasingly inclined from the inside to the outside in a direction opposite to plugging direction S. Plugging direction S there is identical to the surface normal or normal vector 22 of mating surface 140, respectively. The angled sealing lip forms an angle 23 with normal vector 22. Angle 23 between normal vector 22 and the direction of extension of angled sealing lip 18 is preferably smaller than 45°, for example 30°.

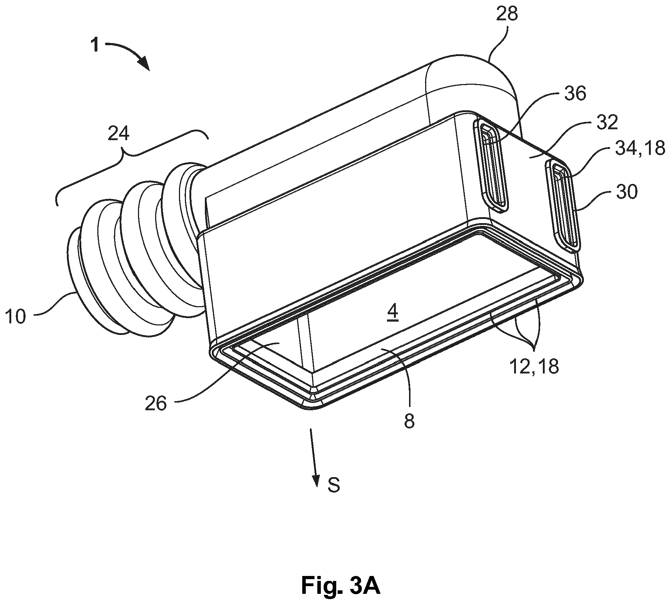

Different exemplary configurations of grommet housing 1 are illustrated in Figures 3a to 3c. In Figures 3a to 3c, insertion opening 8 is respectively illustrated as a rectangular base surface with rounded corners. However, it can define any variety with an edge that encloses a flat surface. For example, the base area of insertion opening 8 can be encircled by any polygon. Alternatively, the base area of insertion opening 8 can be formed to be circular or elliptical.

Furthermore, grommet housing 1 can comprise a tube-like continuation 24. Conductor receiving opening 10 is preferably disposed on tube-like continuation 24. Furthermore, tube-like continuation 24 can be configured like a bellows. Continuation 24 can therefore be compressed or stretched out in a concertina-like manner.

Furthermore, tube-like continuation 24 can be arranged on a first outer wall 26 of the grommet housing.

Grommet housing 1 can comprise a tunnel arch 28 on an outer wall opposite insertion opening 8. Tunnel arch 28 preferably aligns with continuation 24 formed to be tube-like or bellows-like.

In particular when the tunnel arch aligns with the tube-like continuation, flexible cable routing in inner region 4 of grommet housing 1 is possible.

Furthermore, grommet housing 1 can comprise a housing opening 30. Housing opening 30 is preferably disposed on a second outer wall 32 which defines insertion opening 8 or abuts thereagainst, respectively. The end face of the second outer wall can be formed to be, for example, rectangular. Furthermore, housing opening 30 can be arranged opposite conductor receiving opening 10.

Furthermore, housing opening 30 can likewise comprise its own sealing surface 34 which comprises, for example, at least one sealing lip 18 for sealing inner region 4. Sealing surface 34 encircles housing opening 30. Furthermore, sealing surface 34 or at least one sealing lip 18, respectively, of housing opening 30 can be formed by recesses and/or projections.

Grommet housing 1 can comprise a further housing opening 36 which is preferably arranged on same outer wall 32. In particular, it can have the same shape and structure as housing opening 30. As explained further below, housing opening 30 or housing openings 30 and 36, respectively, are configured to receive a locking element which is configured, for example, as a slide, where the sealing lips of respective housing openings 30 and/or 36 seal inner region 4. Sealing lips 18 of sealing surface 34 can be arranged in a stepwise manner. Furthermore, sealing lips 18 extend away from inner region 4 of grommet housing 1, preferably in plugging direction S. As already explained with respect to Figures 2a to 2c, sealing lips 16 can be at different distances from one another, run at an angle away from inner region 4, and/or at least an innermost or outermost sealing lip 18 can have a different width in profile than the other sealing lips.

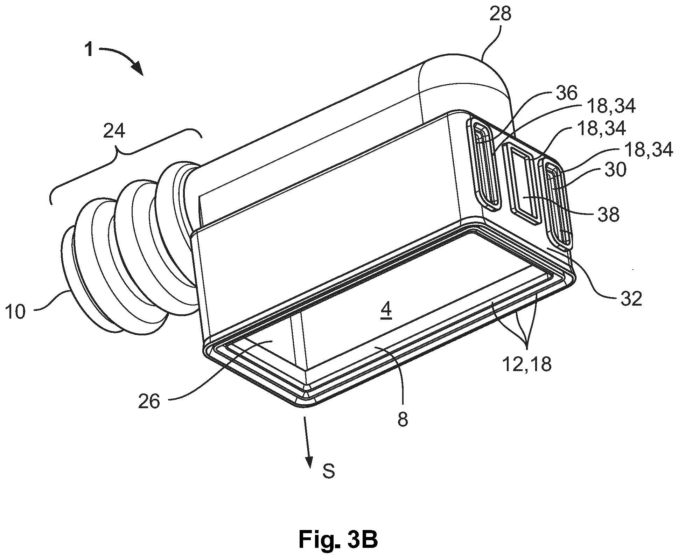

According to a further configuration, which is shown in Figure 3b, grommet housing 1 comprises another further housing opening 38. This further housing opening 38 can be disposed between housing opening 30 and further housing opening 36. Other further housing opening 38 can be configured with a sealing surface 34 just like housing opening 30. In particular, the sealing surface of other further housing opening 38 can comprise sealing lips 18 which seal inner region 4 while receiving a control element (not illustrated in Figure 3b).

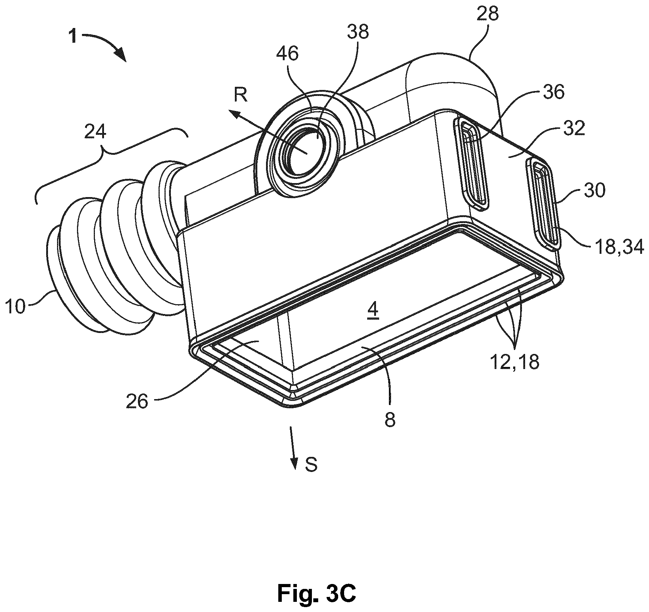

A further alternative configuration of grommet housing 1 is illustrated in Figure 3c. Grommet housing 1 shown comprises a housing opening 30 and a further housing opening 36. However, it can also be configured with only one housing opening on first outer wall 26. Another further housing opening 38 is disposed between housing opening 30 and conductor receiving opening 10. Other further housing opening 38 is preferably arranged on a side wall of tunnel arch 28. In particular, other further housing opening 38 is arranged centrally with respect to the elongate direction of extension of tunnel arch 28 on a supporting side wall of tunnel arch 28. The term supporting side wall is understood to mean that wall that carries or supports the curvature of tunnel arch 28. A second other further housing opening (which is not illustrated in Figure 3c) can be disposed in the oppositely disposed supporting side wall of tunnel arch 28. In particular, these two housing openings formed in tunnel arch 28 can align so that an axis of rotation R is defined.

Any of housing openings 30, 36 and 38 explained in Figures 3a to 3c can protrude in part towards the outer region beyond the outer wall of grommet housing 1 that supports the former. Therefore, any random one of housing openings 30, 36 and 36 can form a collar on the outer wall supporting the former. Alternatively or cumulatively, the collar can be shaped in inner region 4.

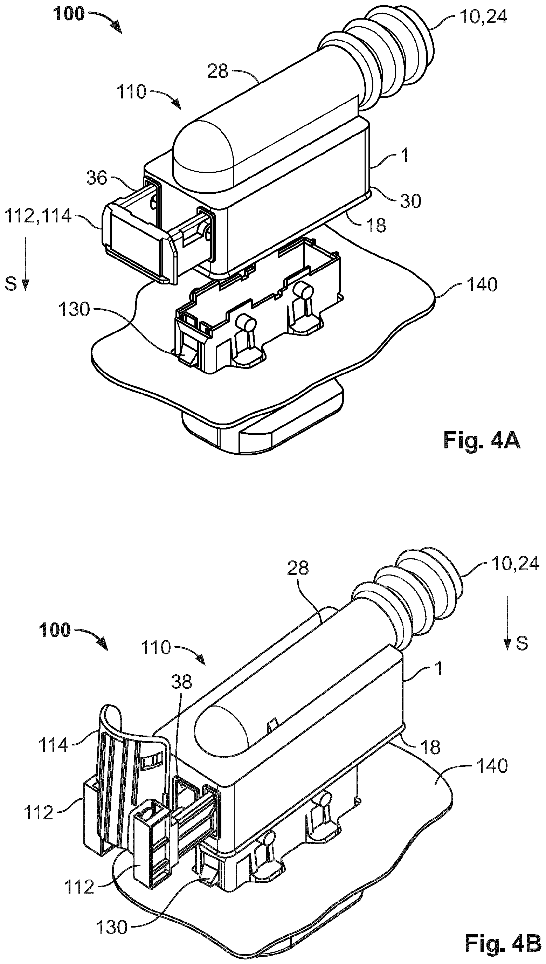

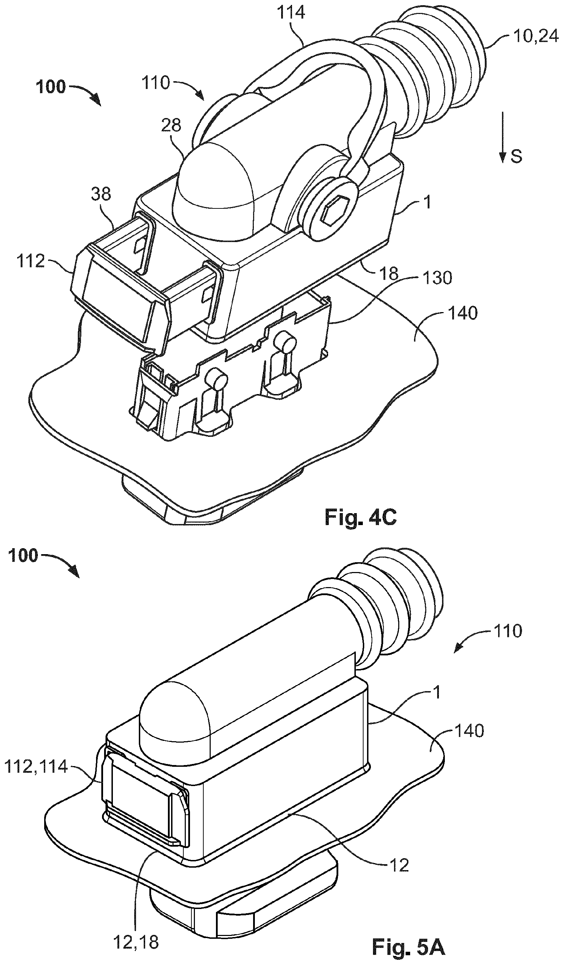

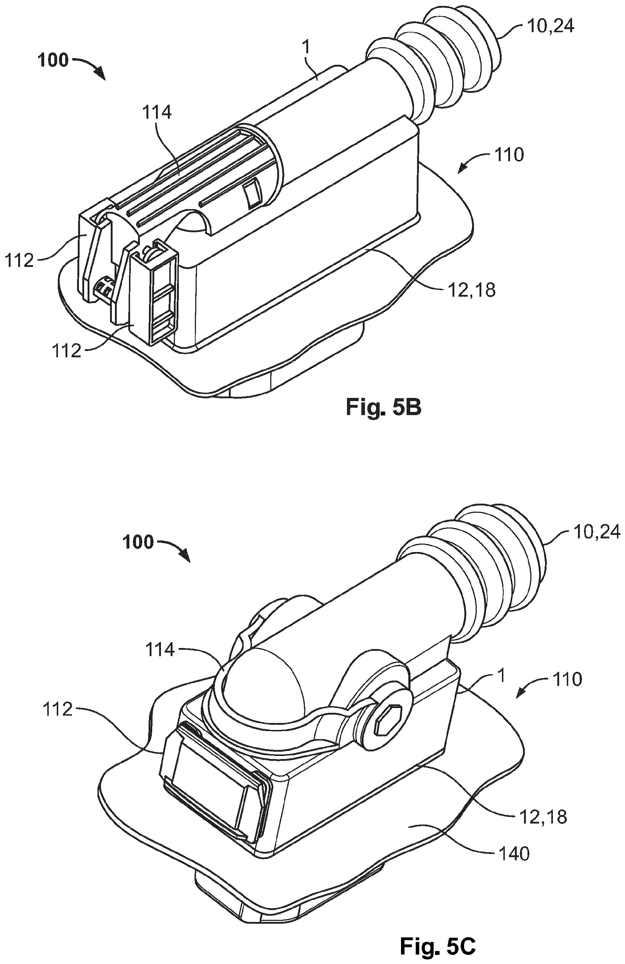

Illustrated in Figures 4a to 4c are different configurations of connector assemblies 100 in a non-inserted state. Illustrated in Figures 5a to 5c are respective connector assemblies 100 from Figures 4a to 4c in an inserted and locked state.

Grommet housing 1 from Figure 3a is illustrated with a locking element 112 in Figure 4a. Locking element 112 can be configured substantially as a slide that has a U-shaped profile. The locking element comprises two rails running in parallel that are connected to each other by way of a web. The rails of locking element 112 penetrate housing opening 30 or 36, respectively, of grommet housing 1. In interaction with mating connector 130, locking element 112 can effect a lock between the mating connector and grommet housing 1 in a state when inserted into grommet housing 1. In particular, this lock can exist between mating connector 130 and a connector insert 6 (which is not shown in Figures 4a to 4c) that is inserted into grommet housing 1. For example, locking element 112 can be inserted into grommet housing 1 by hand.

Together with an inserted connector insert 6, grommet housing 1 can form a connector 110.

As shown in Figures 5a to 5c, the material of sealing surface 12 abuts against mating surface 140 of mating connector 130 to form a seal. The rubber-elastic property of the material of grommet housing 1 there is helpful in forming a reliable seal.

Figure 4b illustrates a further connector assembly 100 which comprises a grommet housing 1 according to the configuration shown in Figure 3b. Unlike locking element 112 in Figure 4a, locking element 112 in Figure 4b not only comprises two rails, but the two rails are connected to one another with a control element 114, for example, a lever, that is mounted to be rotatable. When control element 114 is operated, locking element 112 is pushed into grommet housing 1 so that a lock is created between the grommet housing or inserted connector insert 6, respectively, and mating connector 130.

Control element 114 can be inserted into another further housing opening 38 or can protrude through opening 38.

Grommet housing 1 illustrated in Figure 4b also forms a connector 110 with an inserted connector insert and elements 112 and 114. Advantageously, a force for coupling or locking can be applied due to the control element that is mounted to be rotatable. This is useful if a particularly large number of conductors between the connector insert and the mating connector need to be connected since, in such a case, high frictional forces arise between the individual conductors, pins, and corresponding receiving sockets.

Figure 4c illustrates a further connector assembly 100, where the latter comprises a grommet housing 1 according to the configuration of grommet housing 1 shown in Figure 3c. Similar to the configuration shown in Figure 4a, locking element 112 can be configured as a slide. In this configuration as well, locking element 112 can protrude through housing opening 30 and cumulatively through further housing opening 36. Furthermore, connector insert 6 can comprise a gear that is mechanically coupled with locking element 112. Alternatively, the gear can be inserted as an additional component in grommet housing 1. The gear can comprise a gearwheel rail and a gearwheel. In particular, the gearwheel rail can be connected to locking element 112 so that a motion of the gearwheel rail causes locking element 112 to be pushed into grommet housing 1. Control element 114 can drive the gearwheel. For example, the control element comprises an axis of rotation, that carries the gearwheel, and a lever. When the control element 114 drives the gearwheel, locking element 112 is pushed into grommet housing 1. This creates the lock to secure connector insert 6 with mating connector 130. At the same time, the seal on sealing surface 12 of grommet housing 1 can there be reinforced. In other words, the gearwheel together with the gearwheel rail forms a gear that transmits to mating connector 130 a lever force of the operated control element 114 for locking grommet housing 1.

Control element 114 can preferably be configured as a U-shaped lever. Advantageously, control element 114 in this configuration is particularly fracture-proof and provides the gearwheel with a rotational motion. Alternatively or cumulatively, the gearwheel can also be driven by an external tool, such as a screwdriver or a ratchet. According to this configuration, instead of control element 114, a rotation axis carrying the gearwheel is arranged to be accessible at the other further housing opening so that the gearwheel can be driven externally.

In combination with the inserted connector insert 6, locking element 112, and control element 114, grommet housing 1, as illustrated in Figure 4c, also forms a connector 110 which is connected to mating connector 130.

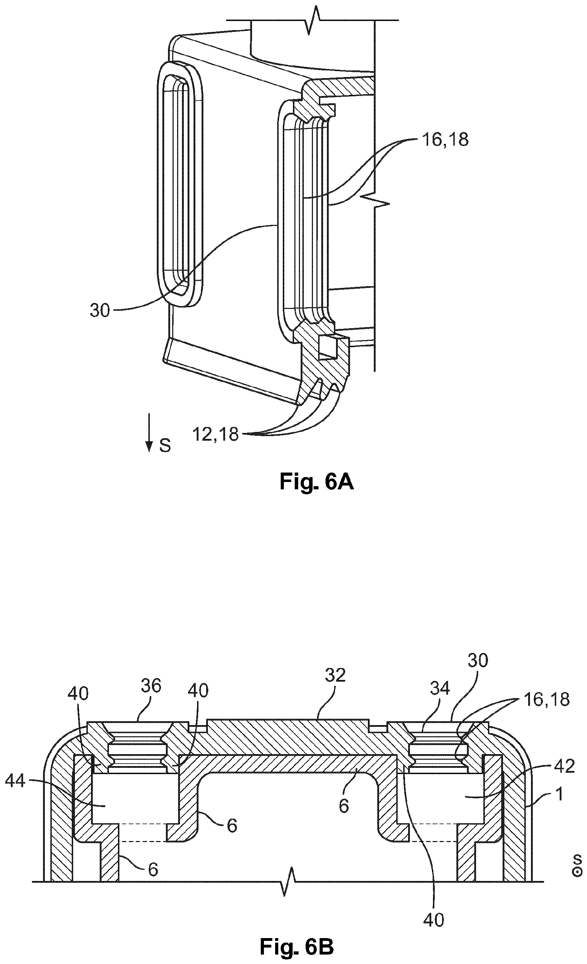

Figure 6a shows a sectional view through a housing opening 30 of an exemplary configuration of grommet housing 1. The sectional view depicts a profile of sealing surface 12 which comprises several sealing lips 16 inclined away from plugging direction S. In the configuration illustrated, sealing surface 34 of the housing opening comprises several sealing lips 16 which form a W-shape in profile. In this case, there are two sealing lips present whose tips are slightly rounded. Alternatively, sealing surface 34 can comprise only one sealing lip 18. Sealing surface 34 of the housing opening can be configured substantially in the same way according to any of the configurations explained in Figures 2a to 2c. For example, an outer one of a plurality of sealing lips 16 can incline away from inner region 4 of grommet housing 1. The other way around, an outer or inner sealing lip 18 can incline toward inner region 4. The distances between sealing lips 16 or the width of a sealing lip 18 can also be varied.

Figure 6b illustrates a further sectional view of grommet housing 1 with an inserted connector insert 6 perpendicular to the sectional view shown in Figure 6a. In the embodiment illustrated, grommet housing 1 comprises two housing openings 30 and 36. However, the features indicated hereafter also apply to a grommet housing 1 according to the invention which comprises only one housing opening 30. Sealing surface 34 or at least one sealing lip 18, respectively, encircles housing opening 30. This ensures that inner region 4 is sealed. Furthermore, the connector insert can comprise an opening for 9 which aligns with housing opening 30. A locking element as illustrated in Figures 4a to 4c can then protrude through grommet housing 1 into connector insert 6. In the configuration illustrated, further housing opening 36 aligns with a further opening 44 of the connector insert.

Furthermore, housing opening 30 forms a collar 40 for opening 42 of connector insert 6. Collar 40 is not only advantageous for sealing inner region 4 of grommet housing 1 but at the same time provides a positioning aid for correctly arranging or aligning connector insert 6 in grommet housing 1.

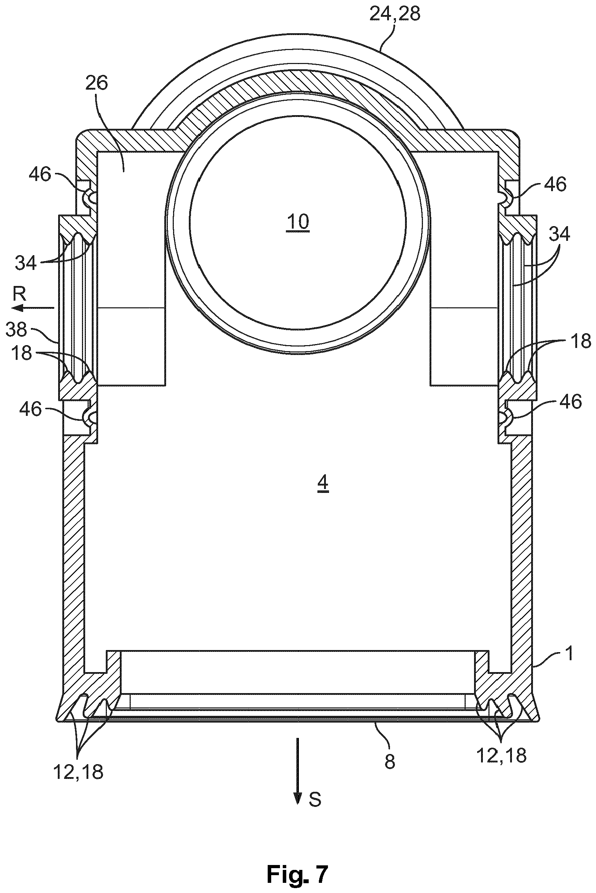

Figure 7 illustrates a sectional view of a grommet housing according to the configuration illustrated in Figure 4c. Other further housing opening 38 comprises a sealing surface for sealing inner region 4. Sealing surface 34 preferably comprises at least one sealing lip 18. Sealing surface 34 can completely encircle housing opening 38 and can likewise be configured according to one of the configurations explained in Figures 2a to 2c.

In addition, grommet housing 1 can comprise a projection 46 concentrically encircling other further housing opening 38. Alternatively, the projection can also be configured as a recess. The concentric projection can preferably be configured as a floating sealing lip. A control element 114 inserted into grommet housing 1 is advantageously held by this projection 46 elastically and to be movable so that other further housing opening 38 seals inner region 4 while control element 114 moves or rotates, respectively.

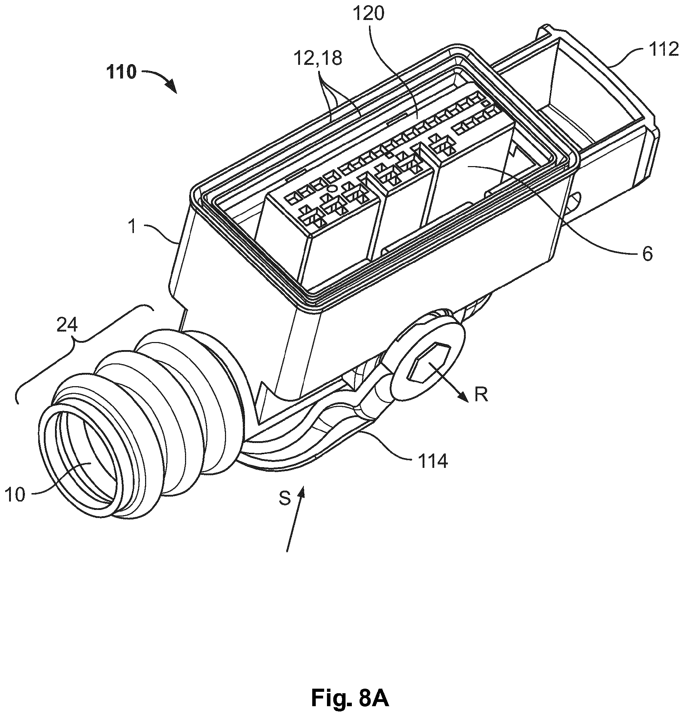

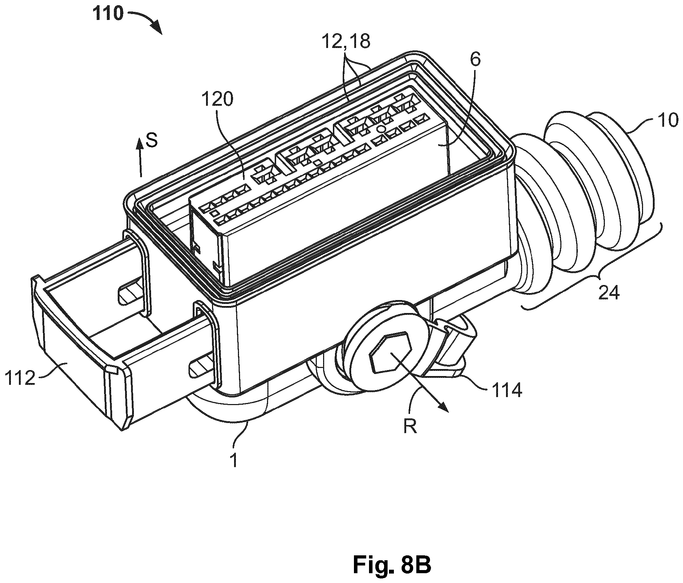

Figures 8a and 8b show perspective views of a connector 110 from views rotated by 180° relative to each other. In the configuration illustrated, connector 110 comprises grommet housing 1 according to the configuration illustrated in Figure 4c. However, any other configuration of grommet housing 1, in which connector insert 6 is inserted and the plugging face 120 of connector 110 faces the direction of plugging direction S, could also be illustrated.

### REFERENCE NUMERALS

- 1: grommet housing
- 2: outer wall of the grommet housing
- 4: inner region
- 6: connector insert
- 8: insertion opening
- 10: conductor receiving opening
- 12: sealing surface
- 14: detailed view of the sealing surface
- 16: sealing lips
- 18: sealing lip
- 20: lateral distance between adjacent sealing lips
- 22: normal vector of the mating surface
- 23: angle
- 24: continuation
- 26: first outer wall
- 28: tunnel arch
- 30: housing opening
- 32: second outer wall
- 34: further sealing surface
- 36: further housing opening
- 38: other further housing opening
- 40: collar
- 42: opening of the connector insert
- 44: further opening of the connector insert
- 46: projection
- 100: connector assembly
- 110: connector
- 112: locking element
- 114: control element
- 120: plugging face
- 130: mating connector
- 140: mating surface
- R: axis of rotation
- S: plugging direction

## Claims

1. Grommet housing (1) for receiving a connector insert (6), comprising:
a conductor receiving opening (10) for passing an electrical or optical conductor from an outer region of said grommet housing (1) into an inner region (4) of said grommet housing (1),
an insertion opening (8) for plugging said connector insert (6) together with a mating connector,
a sealing surface (12) which encircles said insertion opening (8) at least in sections for sealing said inner region (4),
wherein said grommet housing (1) is manufactured from rubber-elastic material.

2. Grommet housing (1) according to claim 1, wherein said sealing surface (12) comprises a sealing lip (18).

3. Grommet housing (1) according to claim 1, wherein said sealing surface (12) comprises at least two sealing lips (16) running parallel to one another.

4. Grommet housing (1) according to claim 3, wherein at least one sealing lip (18) of said at least two sealing lips (16) is narrower or wider in cross section.

5. Grommet housing (1) according to claim 1, wherein said sealing surface (12) comprises at least two sealing lips (16), wherein the sealing lip of said at least two sealing lips that is arranged furthest from said inner region extends inclined from the inside to the outside.

6. Grommet housing (1) according to one of the claims 1 to 5, wherein an outer wall of said grommet housing (1) disposed opposite to said insertion opening (8) comprises a tunnel arch (28).

7. Grommet housing (1) according to one of the claims 1 to 6, wherein said conductor receiving opening (10) continues in a tube-like continuation (24) of said grommet housing (1) which is configured like a bellows.

8. Grommet housing (1) according to claim 7, wherein said tunnel arch (28) aligns with said tube-like continuation (24).

9. Grommet housing (1) according to one of claims 1 to 8, comprising a housing opening (30) for receiving a locking element (112) or a control element (114) of said connector insert (6), wherein a further sealing surface (34) encircles said housing opening (30) for sealing said inner region of said grommet housing (1).

10. Grommet housing (1) according to claim 9, wherein said further sealing surface (34) comprises sealing lips (16) which project in the direction of said inner region (4) and/or which project outwardly.

11. Grommet housing (1) according to one of the claims 1 to 10, wherein said grommet housing (1) is configured to be elastically expandable in a non-destructive manner up to three times the housing volume.

12. Connector (110), comprising:
a grommet housing (1) according to one of the claims 1 to 11,
a connector insert (6) arranged in said inner region (4) of said grommet housing (1), wherein a plugging face (120) of said connector (110) is accessible through said insertion opening (8).

13. Connector, comprising:
a grommet housing (1) according to claim 9 or 10,
a connector insert (6) arranged in said inner region (4) of said grommet housing (1), wherein a plugging face (120) of said connector (110) is accessible through said insertion opening (8),
wherein said housing opening (30) of said grommet housing (1) aligns with an opening of said connector insert (6).

14. Connector according to claim 13, wherein said housing opening (30) of said grommet housing (1) comprises a collar (40) which projects into said opening (42) of said connector insert (6).

15. Connector according to one of the claims 13 or 14, wherein a locking element (112) or a control element (114) of said connector insert (6) projects through said housing opening (30) of said grommet housing (1).

16. Connector assembly (100), comprising:
a grommet housing (1) according to one of the claims 1 to 11,
a mating connector (130) which comprises a mating surface (140),
wherein the rubber-elastic material of said sealing surface (12) abuts against said mating surface (140) to form a seal.
